**Europäisches Patentamt**

**European Patent Office**

**Office européen des brevets**

(11) Numéro de publication: **0 119 935**
**B1**

(12) **FASCICULE DE BREVET EUROPÉEN**

(45) Date de publication du fascicule du brevet:
16.03.88

(21) Numéro de dépôt: **84400579.3**

(22) Date de dépôt: **22.03.84**

(51) Int. Cl.⁴: **F 16 H 37/02**

(54) **Transmission à variateur.**

(30) Priorité: **22.03.83 FR 8304634**

(43) Date de publication de la demande:
**26.09.84 Bulletin 84/39**

(45) Mention de la délivrance du brevet:
**16.03.88 Bulletin 88/11**

(84) Etats contractants désignés:
**DE GB IT NL SE**

(56) Documents cité:
**CH-A-381 944**
**DE-A-2 758 905**
**FR-A-2 420 062**
**US-A-3 442 346**
**US-A-3 686 967**

(73) Titulaire: **REGIE NATIONALE DES USINES RENAULT, Boîte postale 103 8-10 avenue Emile Zola, F-92109 Boulogne- Billancourt (FR)**

(72) Inventeur: **Mathiolon, Henri, 7, avenue de la Tranquillité, F-78000 Versailles (FR)**

(74) Mandataire: **Chassagnon, Jean- Alain, REGIE NATIONALE DES USINES RENAULT (S.0804), F-92109 Boulogne- Billancourt Cedex (FR)**

EP 0 119 935 B1

LIBER, STOCKHOLM 1988

## Description

La présente invention est relative à une transmission pour véhicules automobiles et se rapporte plus particulièrement à une transmission à variation continue du rapport de transmission.

On connait déjà des transmissions sur ce principe et on connait également des améliorations visant à augmenter soit le rendement, soit la variation totale du rapport de transmission pour diminuer la consommation d'énergie. Par ailleurs, on a vu des dispositifs permettant d'accroître la longévité du variateur en le mettant hors circuit pendant certaines phases de fonctionnement, et notamment sur route comme par exemple celui du document FR-A-2 420 062. Généralement ces dispositifs sont compliqués et coûteux en énergie et en prix de fabrication.

Le document CH-A-381 944 décrit déjà une transmission de puissance continuement variable et à rapport de transmission constant comportant un dispositif d'embrayage d'entrée, un variateur et les autres caractéristiques du préambule de la revendication 1.

Le but de la présente invention est de réaliser d'une manière simple et très économique une transmission optimisant le teendement, la longévité et le prix de revient. A cet effet, l'invention a pour objet une transmission de puissance comme indiquée dans la revendication 1.

Selon un mode de réalisation de l'invention, le dispositif d'embrayage d'entrée est un embrayage simple coupant l'alimentation du variateur et de la liaison directe.

Selon un mode de réalisation de l'invention, le dispositif d'embrayage d'entrée est un embrayage coupant l'alimentation de la liaison directe.

Selon un mode de réalisation de l'invention, le dispositif d'embrayage d'entrée est un embrayage double coupant soit l'alimentation du variateur, soit l'alimentation de la liaison directe, laquelle alimentation directe a le pignon récepteur solidaire de l'arbre du pignon d'attaque.

Les caractéristiques de la présente invention sont ainsi les suivantes :
- une branche à liaison directe, toujours entrainée par le moteur thermique est montée en parallèle avec le variateur, et permet de court-circuiter le variateur,
- l'embrayage classique doit être laissé embrayé suivant un mode de réalisation ou peut être débrayé pendant la liaison directe, suivant un autre mode de réalisation,
- un dispositif de crabot à synchroniseur permet de passer de la transmission par le variateur à la transmission directe, ou inversement, lorsqu'il y a synchronisme, c'est-à-dire au rapport de vitesse le plus long du variateur,
- un dispositif électronique permet de détecter ce synchronisme et de commander le changement de mode de transmission.

On voit aisément les avantages d'une telle transmission :
- le variateur, dont l'emploi est intéressant uniquement en circulation urbaine, peut être utilisé dans sa plage normale avec une plage de variation limitée par exemple à 5,5, c'est-à-dire dans la zone où le rendement du variateur est bon,
- la liaison directe permet un fonctionnement avec un rendement nettement amélioré, pouvant atteindre 10 points, en utilisation routière et autoroutière,
- on peut encore améliorer le rendement global de l'ensemble du groupe moto-propulseur en augmentant la plage du variateur vers un rapport de transmission plus long, mais uniquement pour atteindre le synchronisme avec la liaison directe qui elle aussi a un rapport plus long. On utilise ainsi le variateur dans sa zone de plus mauvais rendement que pendant un temps très court. Une plage totale de 6 peut ainsi être utilisée, momentanément,
- lorsque la liaison directe est active, si on n'actionne pas l'embrayage, le variateur continue à tourner, mais sans couple et se trouve donc prêt à être réutilisé, ce qui peut être intéressant si le profil du parcours est un peu difficile. Par contre sur route et autoroute à profil peu varié, on peut arrêter le variateur en débrayant ; le gain en rendement sera meilleur, mais le retour à l'utilisation du variateur sera un peu plus long.

Bien sûr on peut compliquer le système en mettant deux embrayages, le seul avantage étant d'éviter la rupture de couple lors du changement de mode de transmission.

Les réalisations qui sont représentées en annexe, ne sont données qu'à titre d'exemple et servent de bases pour la description et l'explication du fonctionnement de la présente invention.

Les dessins annexés sont les suivants :
- La figure 1 représente la chaine cinématique d'ensemble d'une transmission dans laquelle le variateur ne peut être débrayé pendant la liaison directe.
- La figure 2 représente la chaine cinématique de la même transmission que celle de la figure 1, mais dans laquelle le variateur peut être débrayé pendant la liaison directe.
- La figure 3 représente la chaine cinématique d'un ensemble de transmission, utilisant deux embrayages au lieu d'un et permettant le changement de mode de transmission sans rupture de couple.
- La figure 4 représente la disposition, de l'une quelconque des transmissions précédentes, mais vue suivant une coupe de la figure 1 sans la marche arrière ni l'embrayage.
- La figure 5 représente suivant une coupe de la figure 1, la prise directe et la marche arrière.

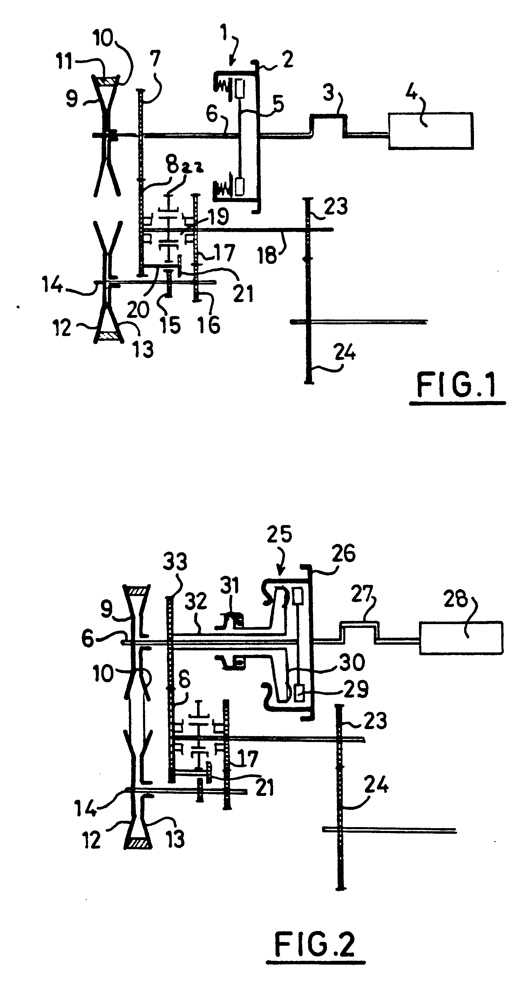

La figure 1 représente la chaine cinématique d'une transmission comprenant :
- un embrayage classique 1, simple dont la cloche 2 est solidaire en rotation du vilebrequin 3 du moteur thermique 4. Le disque 5 de l'embrayage 1 est relié à l'arbre 6 qui porte le pignon 7, primaire de la liaison directe en engrenant avec le pignon 8 et les poulies 9 et 10 formant le primaire du variateur à courroie 11.

- Le variateur à courroie 11 a donc ses poulies primaires 9 et 10 sur l'arbre 6 et ses poulies secondaires 12 et 13 sur l'arbre secondaire 14.

On ne représentera pas plus en détail le variateur à courroie dont on sait qu'une des poulies primaires est liée à l'arbre 6 et l'autre peut coulisser sur cet arbre et de même pour le secondaire.

- L'arbre secondaire 14 porte les pignons 15 et 16, ce dernier engrenant avec le pignon 17 tournant librement sur l'arbre 18.

- L'arbre 18 porte solidairement un crabot 19 qui peut être craboté soit avec le pignon 17 pour réaliser la transmission par le variateur, soit avec le pignon 8 pour réaliser la liaison directe.

- L'arbre 20 porte un pignon 21 pour réaliser la marche arrière entre le pignon 15 solidaire de l'arbre 14 et le pignon 22 porté par le baladeur du crabot 19.

- L'arbre 18 porte solidairement le pignon 23 qui engrène avec la couronne 24, celle-ci entrainant le différentiel non représenté sur la figure.

La transmission ainsi décrite, comporte en plus un dispositif électronique avec capteur de vitesse de rotation des pignons 8 et 17, actionneur de commande du crabot 19, l'embrayage 1 pouvant être commandé manuellement ou automatiquement.

L'ensemble de commande électronique, non décrit par les dessins annexés et connu en soi, gère automatiquement la transmission et le moteur thermique de manière à utiliser ce dernier en permanence dans sa zone de consommation économique, en pilotant le carburateur ou la pompe à injection du moteur et le rapport de transmission par l'intermédiaire de la commande de variateur.

Ce système électronique est donc utilisé, en outre pour détecter le synchronisme de rotation des pignons 8 et 17, permettant ainsi de passer d'un mode de transmission à l'autre, à savoir : direct ou par le variateur.

Lorsque l'on vent passer au mode de transmission directe, le système électronique pilote la commande du variateur vers le rapport long jusqu'à obtenir le synchronisme des pignons 8 et 17 ; à ce moment là, il commande le moteur thermique par son carburateur ou sa pompe à injection de telle manière que le couple transmis soit nul, ce qui facilite le décrabotage ; on peut alors commander le crabot 19 pour le désolidariser du pignon 17 et le solidariser avec le pignon 8 : la liaison directe est réalisée il ne reste qu'à revenir au couple moteur initial par action sur le carburateur ou sur la pompe à injection.

En réalité, le retour au synchronisme pour passer de la transmission directe à la transmission par le variateur, n'est pas necessaire. En effet, on peut laisser le variateur à un rapport un peu moins long que celui de la prise directe et procéder de la manière suivante :

- commande du moteur thermique pour annuler son couple pour décraboter le pignon 8 et mise au neutre du crabot 19,
- accélération du moteur pour obtenir le synchronisme entre le crabot 19 et le pignon 17,
- crabotage du pignon 17 par le crabot 19.

On obtient ainsi l'effet d'augmentation brutale du couple entre la prise directe et le variateur. Le rapport de ce dernier peut par exemple être réglé à 0,8 du rapport de la prise directe.

Pendant le fonctionnement en liaison directe, le rapport de transmission du variateur peut être réduit ou être conservé à sa valeur maxi ; une réduction aux environs du rapport 1/1 pour le variateur améliorant la longévité de la courroie. A noter que l'on peut également réduire la consommation des auxiliaires de commande du variateur puisque l'énergie transmise par celui-ci est nulle aux pertes près.

Pour illustrer ce fonctionnement on peut prendre un exemple, avec un variateur d'ouverture 5,5 dont le rapport court est de

$$\frac{1}{\sqrt{5,5}} = 0,426 \text{ et le rapport long de } \sqrt{5,5} = 2,345.$$

Le rapport des pignons 16 et 17 sera réducteur, par exemple, 1,46 ce qui donnera entre la vitesse moteur et la vitesse du pignon d'attaque 23, une plage de variation de 0,292 à 1,606.

En prise directe le rapport entre les pignons 7 et 8 sera multiplicateur du rapport 1,606.

Afin de sauvegarder la longévité de la courroie du variateur on pourra, n'utiliser en circulation urbaine qu'une ouverture de 5 du rapport de transmission, le rapport long étant ramené de 2,345 à $2,345 \times \frac{5}{5,5} = 2,132$. Le rapport long de 2,345 n'étant utilisé que pour réaliser le synchronisme en préparation du passage en liaison directe.

La figure 2 représente une chaine cinématique d'une transmission permettant d'arrêter le variateur lorsque le couple est transmis par la liaison directe.

L'embrayage classique 1 est remplacé par un embrayage 25 dont la cloche 26 est reliée solidairement au vilebrequin 27 d'un moteur 28. Le plateau 29 de cet embrayage est relié à l'arbre 6 portant solidairement les poulies primaires 9 et 10 du variateur à courroie 11. Cet embrayage a également un plateau d'appui 30, coulissant sur un arbre 32 mais lié en rotation à cet arbre 32 et à la cloche 26 de l'embrayage 25 ; la butée 31 permet d'avoir 2 positions stables de cet embrayage : embrayée lorsqu'elle est déplacée vers la gauche, débrayée lorsqu'elle est déplacée vers la droite.

L'arbre 32 porte un pignon 33 solidaire dudit arbre 32, le pignon 33 engrenant avec le pignon 8 comme sur la figure 1.

Le fonctionnement est le même que celui de la transmission représentée sur la figure 1, à la différence près, que lorsque l'on se trouve en liaison directe, il est possible de débrayer et d'arrêter totalement la rotation du variateur, ce qui supprime totalement les pertes de cet organe et donne un meilleur rendement de transmission. Ceci est particulièrement intéressant sur les longs parcours ou reliefs peu tourmentés, le conducteur ayant la possibilité de revenir en fonctionnement par le variateur soit automatiquement, ce qui prend un peu de temps puisqu'il faut relancer le variateur, soit de prévoir le changement de mode et de relancer le variateur préalablement, le changement de mode intervenant après d'une manière automatique.

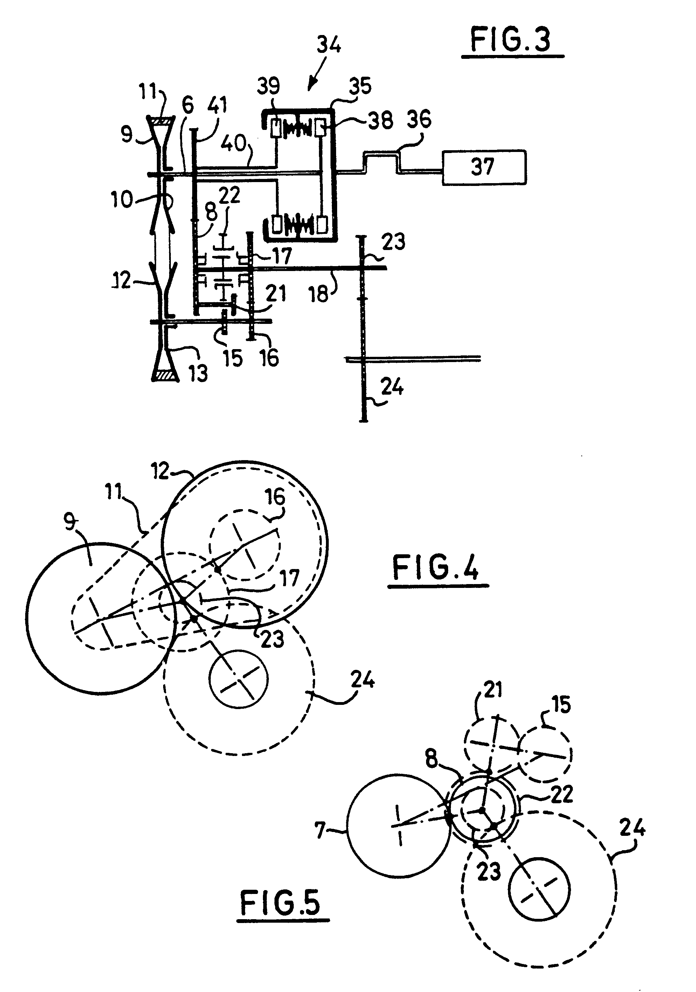

La figure 3 représente une variante de la chaine cinématique d'une transmission avec un embrayage double permettant le changement de mode sans rupture de couple.

L'embrayage double 34, dont la cloche 35 est solidaire du vilebrequin 36 du moteur 37 possède deux plateaux 38 et 39, le premier étant solidaire de l'arbre 6 portant les poulies primaires 9 et 10 du variateur à courroie 11, le second étant solidaire de l'arbre 40, celui-ci portant le pignon 41 réalisant la liaison directe par engrènement avec le pignon 8 qui est solidaire de l'arbre 18.

Lors du changement de mode, toujours au synchronisme en rotation des pignons 8 et 17, on débraye le plateau 38 de l'embrayage 34 et on embraye le plateau 39 ; le transfert de charge se fait ainsi sans rupture de couple. Le reste du fonctionnement est le même que pour les exemples précédents.

A noter que dans ce cas le synchronisme n'a pas besoin d'être rigoureux, cependant il doit être assez bon si l'on veut éviter les à-coups et obtenir un bon confort de conduite.

Les figures 4 et 5 représentent une vue en bout, suivant les axes, de la cinématique de la transmission représentée par la figure 1.

Ces figures 4 et 5 ont simplement pour but de montrer la compacité d'un tel système et la simplicité de l'ensemble, on apprécie ainsi très bien l'intérêt de cette invention.

Bien entendu, au cours de la démonstration il a toujours été fait référence à un variateur à courroie et poulies, mais il est évident que l'invention s'applique à tous les types de variateurs dont les arbres d'entrée et de sortie sont parallèles et non co-axiaux.

## Revendications

1. Transmission de puissance à rapport de transmission continuement variable et à rapport de transmission constant notamment pour véhicule automobile économe en énergie comportant un dispositif d'embrayage d'entrée et comportant d'une part un variateur (11) constitué essentiellement par un arbre primaire (6) et un arbre secondaire (14), ces arbres portant des dispositifs de variation et de transmission de la puissance, et d'autre part une liaison directe à rapport constant permettant de court-circuiter le variateur (11) au moyen d'un embrayage de sortie (19) disposé sur un arbre de pignon d'attaque (23), ledit embrayage de sortie reçoit le mouvement, soit par le variateur (11) et un seul couple de pignons (16 et 17), soit par une liaison directe, caractérisée en ce que ledit embrayage de sortie est un dispositif de crabotage (19) solidaire dudit arbre (18) du pignon d'attaque (23), la liaison directe est constituée par un seul couple de pignons (7 et 8), et une marche arrière est obtenue par la liaison par le variateur (11) au moyen d'un pignon (15) solidaire de l'arbre secondaire (14) du variateur, du pignon (22) solidaire du crabot (19) et d'un pignon intermédiaire (21) monté sur un arbre (20).

2. Transmission selon la revendication 1, caractérisée en ce que le dispositif d'embrayage d'entrée est un embrayage simple (1) coupant l'alimentation du variateur et de la liaison directe.

3. Transmission selon la revendication 1, caractérisée en ce que le dispositif d'embrayage d'entrée est un embrayage (25) coupant l'alimentation du variateur.

4. Transmission selon la revendication 1, caractérisée en ce que le dispositif d'embrayage d'entrée est un embrayage double (34) coupant, soit l'alimentation du variateur (11), soit l'alimentation de la liaison directe, laquelle alimentation directe a le pignon (8) solidaire de l'arbre (18) du pignon d'attaque (23).

## Patentansprüche

1. Kraftübertragungsanordnung mit einem gleichmäßig variablen Kraftübertragungsverhältnis und mit einem konstanten Kraftübertragungsverhältnis, insbesondere für Energie sparende Kraftfahrzeuge, mit einer Eingangskupplung und mit einem Variator (11) einerseits, der im wesentlichen aus einer Primärwelle (6) und einer Sekundärwelle (14) besteht, wobei diese Wellen die Anordnungen zur Variation und zur Übertragung der Kraft tragen sowie mit einer Direktverbindung mit konstantem Verhältnis andererseits zum Überbrücken des Variators (11) mittels einer Ausgangskupplung (19), die auf einer Welle des Trieblings (23) angeordnet ist, wobei der Ausgangskupplung die Bewegung entweder über den Variator (11) und ein Paar Ritzel (16 und 17) oder über eine Direktverbindung zugeführt wird, dadurch gekennzeichnet, daß die Ausgangskupplung eine Klauenkupplung (19) ist, die fest mit der Welle (18) des Trieblings (23) verbunden ist, wobei die Direktverbindung durch ein einziges Paar Ritzel (7 und 9) gebildet wird, und daß eine Rückwärtsfahrt erhalten wird durch die Verbindung des Variators (11) mittels eines mit der Sekundärwelle (14) des Variators fest verbundenen Ritzels (15) des Ritzels (22), der mit der Klauenkupplung (19) fest verbunden ist und eines Zwischenritzels (21) auf einer Welle (20).

2. Kraftübertragungsanordnung nach Anspruch 1, dadurch gekennzeichnet, daß die Eingangskupplung eine einfache Kupplung (1) ist, die die Kraftübertragung zum Variator und zur Direktverbindung unterbricht.

3. Kraftübertragungsanordnung nach Anspruch 1, dadurch gekennzeichnet, daß die Eingangskupplung eine Kupplung (25) ist, die die Kraftübertragung zum Variator unterbricht.

4. Kraftübertragungsanordnung nach Anspruch 1, dadurch gekennzeichnet, daß die Eingangskupplung eine Doppelkupplung (34) ist, die entweder die Kraftübertragung zum Variator (11) oder die Kraftübertragung zur Direktverbindung unterbricht, wobei bei der Direktübertragung das Ritzel (8) fest mit der Welle (18) des Trieblings (23) verbunden ist.

**Claims**

1. A power transmission with a continuously variable transmission ratio and a constant transmission ratio, in particular for an energy-economic motor vehicle, comprising an input clutch device and comprising on the one hand a variation means (11) essentially formed by a primary shaft (6) and a secondary shaft (14), said shafts carrying power transmission and variation devices, and on the other hand a direct constant-ratio connection permitting short-circuiting of the variation means (11) by means of an output clutch (19) disposed on a drive pinion shaft (23), said output clutch receiving the movement either by way of the variation means (11) and a single pair of pinions (16 and 17) or by a direct connection, characterised in that said output clutch is a dog clutch device (19) which is fixed with respect to said shaft (18) of the drive pinion (23), the direct connection is formed by a single pair of pinions (7 and 8) and a reverse gear is obtained by the connection by the variation means (11) by means of a pinion (15) which is fixed with respect to the secondary shaft (14) of the variation means, the pinion (22) which is fixed with respect to the dog clutch (19) and an intermediate pinion (21) mounted on a shaft (20).

2. A transmission according to claim 1 characterised in that the input clutch device is a simple clutch (1) which interrupts the feed of the variation means and the direct connection.

3. A transmission according to claim 1 characterised in that the input clutch device is a clutch (25) for interrupting the feed of the variation means.

4. A transmission according to claim 1 characterised in that the input clutch device is a double clutch (34) which interrupts either the feed of the variation means (11) or the feed of the direct connection, which direct feed has the pinion (8) which is fixed with respect to the shaft (18) of the drive pinion (23).

FIG.1

FIG.2

0 119 935

FIG.3

FIG.4

FIG.5

3